# EUROPEAN PATENT SPECIFICATION

(11) **EP 2 926 539 B1**
(45) Date of publication and mention of the grant of the patent: **05.09.2018**
(21) Application number: 13801920.3
(22) Date of filing: 13.11.2013
(51) Int. Cl.: H04M 3/56, H04M 3/22

(54) **SYSTEMS FOR PROVIDING SERVICES IN A VOICE CONFERENCING ENVIRONMENT**
SYSTEME ZUR BEREITSTELLUNG VON DIENSTEN IN EINER SPRACHKONFERENZUMGEBUNG
SYSTÈMES POUR FOURNIR DES SERVICES DANS UN ENVIRONNEMENT DE VIDÉOCONFÉRENCE

(30) Priority: 29.11.2012 US 201261731386 P
(43) Date of publication of application: 07.10.2015
(73) Proprietor: Dolby Laboratories Licensing Corporation, San Francisco, CA 94103 (US)
(72) Inventor: CATZ, Jean-Francois, F-13510 Eguilles (FR); SPITTLE, Gary, San Francisco, California 94103 (US)
(74) Representative: Dolby International AB Patent Group Europe
(86) International application number: PCT/US2013/069881
(87) International publication number: WO 2014/085093

(56) References cited:
- US-A1- 2003 108 000

## Description

### TECHNICAL FIELD

The current invention concerns various embodiments of a (e.g. voice) conferencing architecture, specifically including high scalability.

One example a voice conferencing system is provided by US 2003/0108000. However, satisfactory solutions for activation and licensing of conference servers is not disclosed by US 2003/0108000.

### SUMMARY OF THE INVENTION

The suggested Architecture provides high quality audio processing capabilities, preferably implemented in the Cloud. Its flexible componentized and multi-tier architecture enables Communication Service Providers to select among a wide range of integration and deployment scenarios.

### BRIEF DESCRIPTION OF THE DRAWINGS

Fig. 1 depicts a reference architecture diagram;
Fig. 2 depicts an embodiment of a Performance Management System, which can be implemented e.g. in a Performance Server;
Fig 3 exhibits further details of the Performance Management System, specifically interfaces with other functions;
Fig. 4 shows a licensing process, which can e.g. be implemented as a License Manager function in the Performance Server;
Fig. 5 depicts an automatic configuration process for Conferencing Servers;
Figs. A & 6B show an example of Real Time Performance monitoring functions;
Fig. 7 exhibits Real (or near real) Time monitoring functions for one Conferencing Server; and
Figs. 8A & 8B depict examples of monitoring and data gathering call flows;

### DETAILED DECRIPTION OF THE INVENTION

Systems allowing for a highly scalable (e.g. voice) conferencing architecture are laid down in the independent claims. Preferred embodiments are described in the dependent claims.

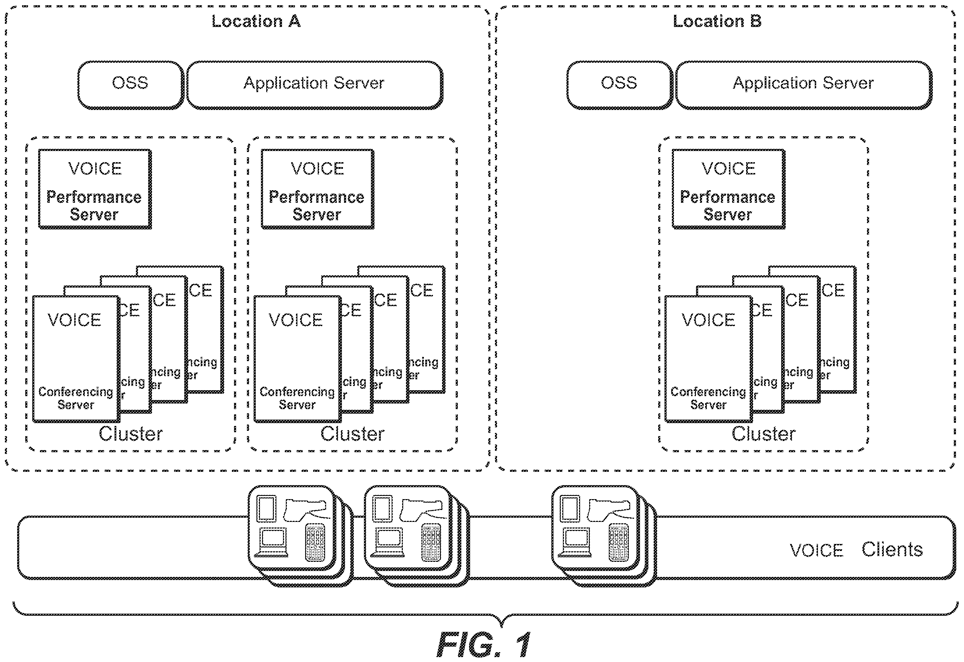

As shown in Fig. 1, Voice Conferencing Servers can be deployed as part of a pool of servers called a Cluster. A Cluster is an autonomous virtual component containing one or more Voice Performance Management Systems and an unlimited number of Voice Conferencing Servers.

One or more Clusters of Servers can be deployed in a specific physical location such as a Data Center or Point of Presence (POP).

The figure (i.e. Fig 1) shows a cluster of servers being collocated. However, a specific Cluster can contain Voice Conferencing Servers running from different physical locations, allowing high availability and data recovery capabilities across different geographical regions.

Conferencing Servers are activated dynamically within each Cluster. They can be moved, in a virtual sense, from one Cluster to another without any configuration task. The conferencing server is assigned to a single cluster.

Conferencing Servers become automatically managed upon a license-based activation within each Cluster. No configuration is required. The licensing limitations on performance, such as available ports, can be freely distributed within the cluster of servers.

Large conferences can be hosted in one single Conferencing Server, or across multiple Conferencing Servers within the same Cluster, or even across multiple Clusters. A conference can be dynamically reassigned to a different set of clusters or servers. A conference can be split across servers depending on the types of external connections that are used, e.g. such that all PSTN traffic is loaded onto a single server and all VOIP traffic onto a different server. Alternatively, resource loading can be balanced across multiple servers.

Conferencing Servers can run independently from each other within the same Cluster, and can but are not required to communicate to each other.

However, data routing is required between servers when a single conference is distributed between multiple servers or clusters.

Conferencing Servers may use a standard protocol such as Session Initiation Protocol (SIP) to communicate with a Voice Performance Server.

### Voice Performance Management System

A Voice Performance Management System (DPMS) is a key component of the Voice Service Architecture.

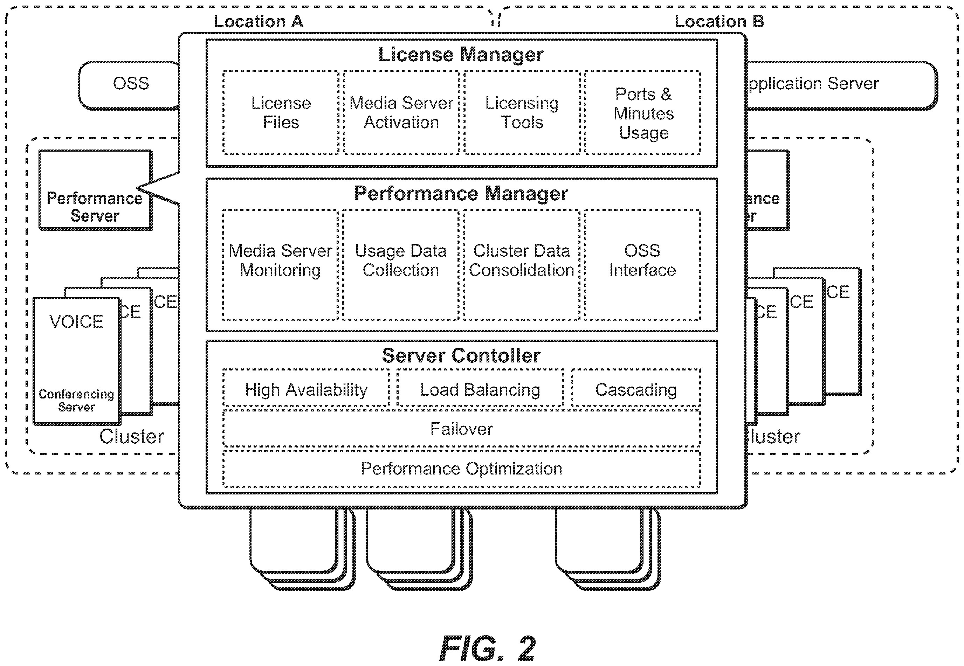

DPMS is responsible for handling one or more or all of the following tasks within a Cluster, as shown in Fig. 2:
- Licensing
- Real-Time and Historical Performance Monitoring
- Cascading, High Availability, Failover, Load Balancing and Performance Optimization

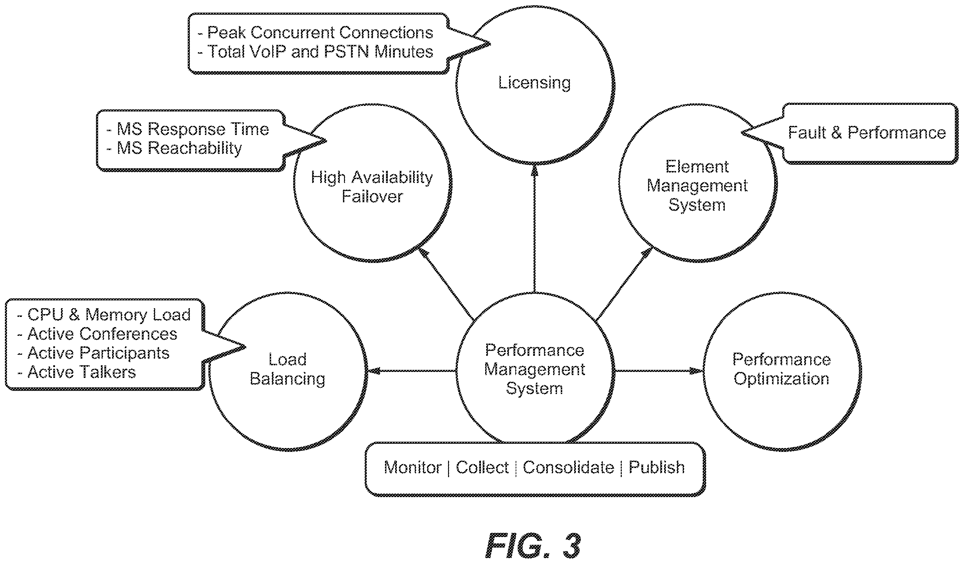

DPMS collects and consolidates real-time and historical metrics and provides interfaces to different internal and external software components, as shown in Fig 3.

### Flexible Licensing Management

Licenses are handled at the Cluster level. There is no need to install any license file manually on each Conferencing Server. Each Voice Conferencing Server (Media Server) is automatically activated (licensed) during the startup process by getting its license key from the DPMS.

When Conferencing Server needs to be moved from one Cluster to another, it will automatically be licensed within the new Cluster without any configuration. Conferencing Server re-allocation process is fully automated. This involves removing the license allocation from one cluster and reallocating the license components from the new cluster.

DPMS can handle different types of licenses, such as Development or Production.

Licensing change management is done dynamically; no Server restart is required to increment or decrement licensed resources.

Voice Conference Server within a Cluster can be licensed based on different metrics, and shall not be limited to Peak Concurrent Connections (PCC).

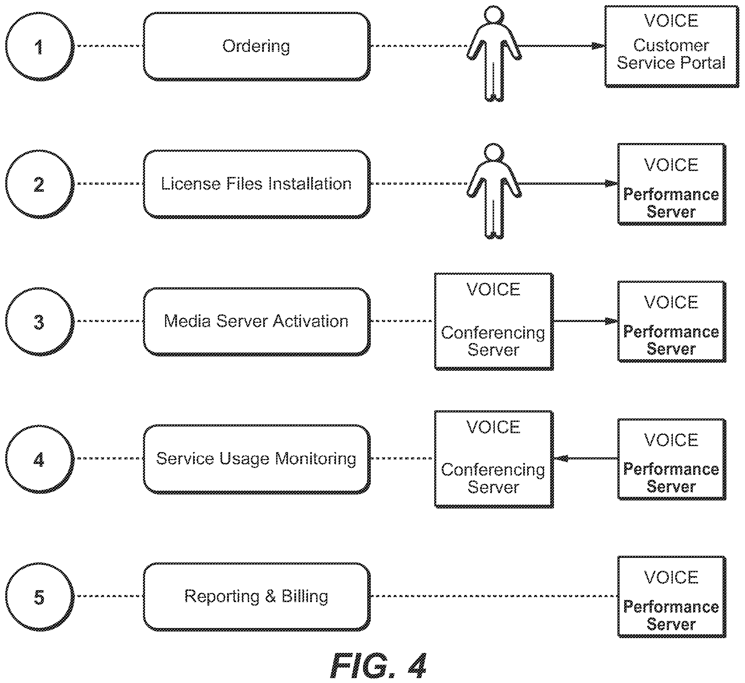

A more complete licensing process is shown in Fig. 4.

Another stage of creating license codes based on a request from a customer can also be added. This stage then will have a validation component to ensure the correct license has been generated.

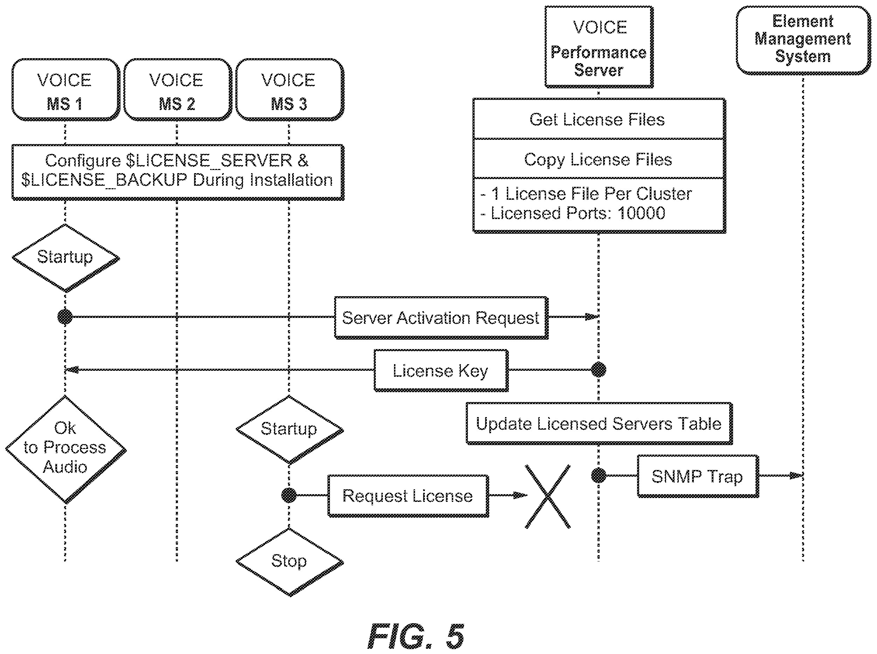

There is no need to configure in advance the list of Conference Servers in a Cluster at the DPMS level. DPMS learns and updates the "licensed server" list automatically upon receiving a server activation request from each Conference Server, as shown in Fig 5.

In order to avoid any single point of failure, DPMS can be deployed with 1 primary server + 1 backup server, where the backup system is running in standby mode until the primary system fails. Each system communicates with the other in real-time and the failover mechanism is fully automated.

If the DPMS and its backup fail, there should be no interruption to the performance of the conference servers, therefore allowing conferences to continue. Metrics will continue to be logged within each of the conference servers. The DPMS will be updated with the most recent information when it comes back online and reconnects to the conference servers.

License checks are only done during initial Conference Server activation, so that DPMS availability never affects any real-time operations (e.g. Primary DPMS and its Backup system can fail without affecting, in any circumstances, the Conference service availability and quality).

DPMS provides a set of tools in order to manage Cluster licenses. License tools can be used using standard Command Line Interface (CLI) or/and Simple Network Management Protocol (SNMP):

### • Determine license usage

∘ List activated servers from which DPMS received activation requests
∘ List active media servers
∘ List unreachable media servers
∘ List "threshold violation usage"
∘ Get current Peak Concurrent Connections (or any selected metric used for licensing purpose)
∘ Get minute/hourly/daily/weekly/monthly PCC value (this can be for each type of connection, PSTN, VOIP, Dolby, G711, G722, enhanced, basic etc.)

### • Refresh Licenses

DPMS is able to send notifications based upon any licensing modifications or new server activation requests. Those notifications can be sent using standard SNMP trap to any external Element Management System (EMS) part of the OSS/BSS platform.

DPMS tracks in near real-time (every minute) usage across multiple Dolby Voice Conference Servers. Licensing data collection, data consolidation across servers and data computation is done by DPMS, which is responsible to send notifications upon license usage threshold violation.

### Real-Time Performance Monitoring

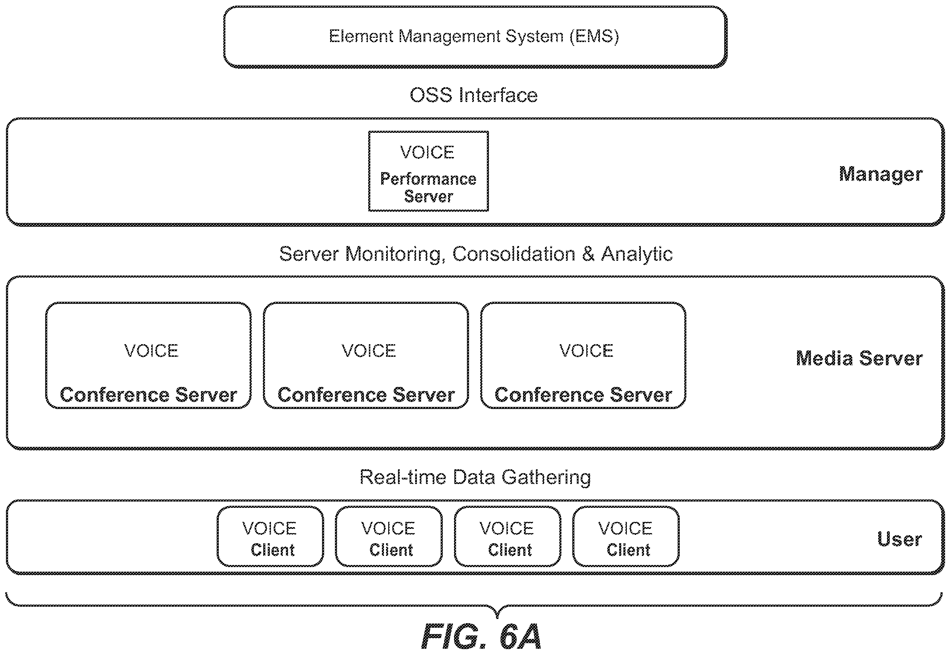

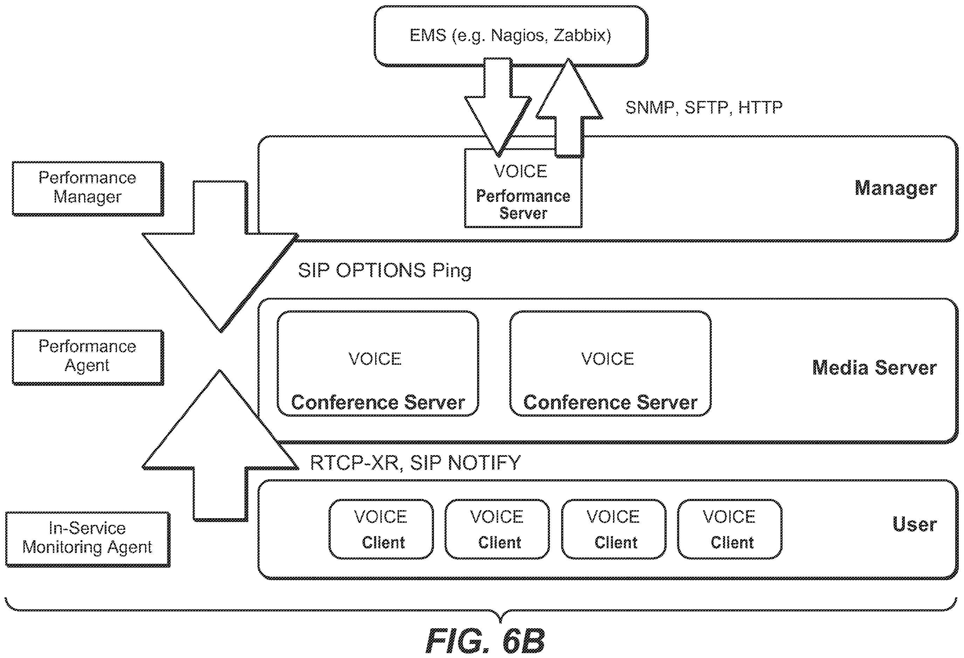

Real-Time Performance Monitoring is a multi-tier architecture, where performance data are provided at the Client level, Conference Server level and Cluster level as they are consolidated by the DPMS (Figs. 6A & 6B).

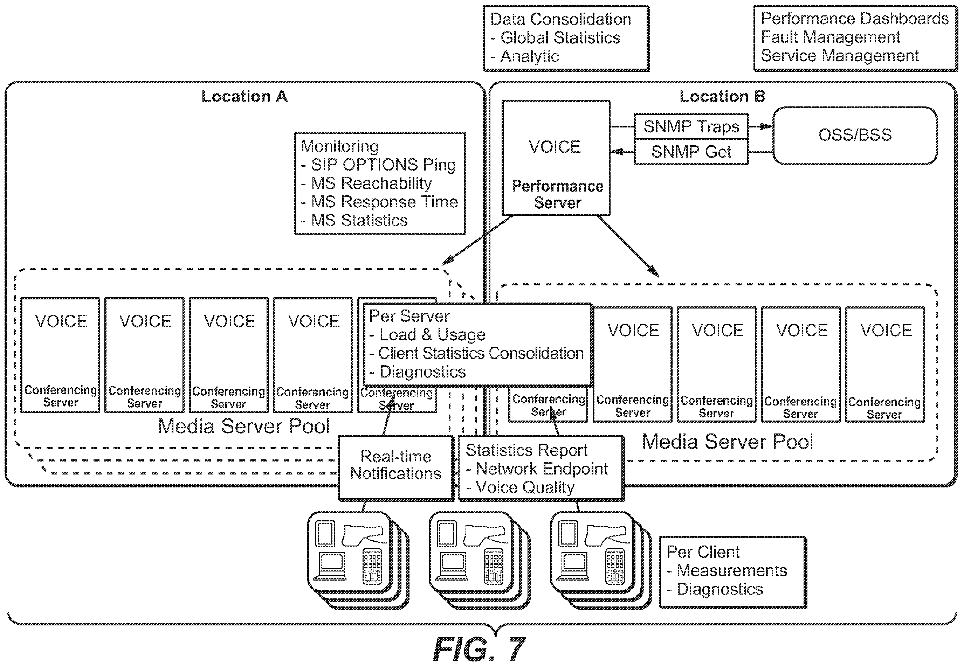

Each Conference Server is monitored in real-time or near real-time within a Cluster, using e.g. standard protocols as shown in Fig. 7.

This multi-layers architecture design allows DPMS to provide end-to-end Performance Monitoring:
- Real-time and near real-time session based performance measurement, from client (software or hardware end-point) to Media Server - Conference quality
- In Service Monitoring for Audio Quality optimization
- Real-time and near real-time Key Performance Indicators data collection, from Client to Server
- Real-time session based Root Cause Analysis and Diagnostics
- Client based and Server based Data Consolidation and Analytics
- End-to-end Audio Quality and Network Impairment measurement - link quality

DPMS key functions may include:
- Real-Time monitoring
- Fault & Performance metrics data collection
- Fault & Performance data formatting
- Fault & Performance data consolidation
- Call Detail Records and Conference Detail Records consolidation
- Fault & Performance analytics
- Statistic data Publishing, acting as a Data source Provider for OSS/BSS
- Performance Optimization to highlight bottlenecks in the system and find the highest consumption of resources.
- Dynamic Resource configuration and Allocation

DPMS can employ standard "SIP OPTIONS Ping/Heartbeat" protocol to test reachability and responsiveness of each Conference Server in its Cluster. In the meantime, each component within a Cluster (Conference Server and DPMS) has their own SNMP Agent so they can be monitored by any external EMS.

Standard data channels are used for communication with EMS, providing "typical" performance data. Advanced performance data can be exposed where needed.

As part of a regular Conference Server "SIP Ping" process, the Performance Manager monitors the capability to collect statistic data from each Media Server, and keeps track of each Media Server reachability.

Each Conference Server is responsible to store and maintain its own Statistics records, until DPMS can collect these records.

Each Conference Server can still operate as usual even if DPMS is down or offline. Performance data can continue to be stored locally, waiting until the next data collection from DPMS. All new records can be stored locally on each Conference Server and can be smoothly and smartly collected by the DPMS at the time this one retrieves its online status.

This open and flexible design approach allows better data accuracy as some components might fail without affecting the overall data collection process.

DPMS can also include an analytic engine, which provides some additional performance data computation based on different criteria, such as:
- Timeline data correlation
- Object group data correlation
- Service Level Agreement business data correlation

Data collected and consolidated by DPMS can be reused for multiple purposes, such as licensing, historical reporting or Service Level Agreement.

This architecture design allows different data gathering approaches, such as:
- Regular heartbeat data collection
- Event based (e.g. threshold violation, error notification...) when needed
- Priority based data collection, when CPU or bandwidth allows processing to proceed

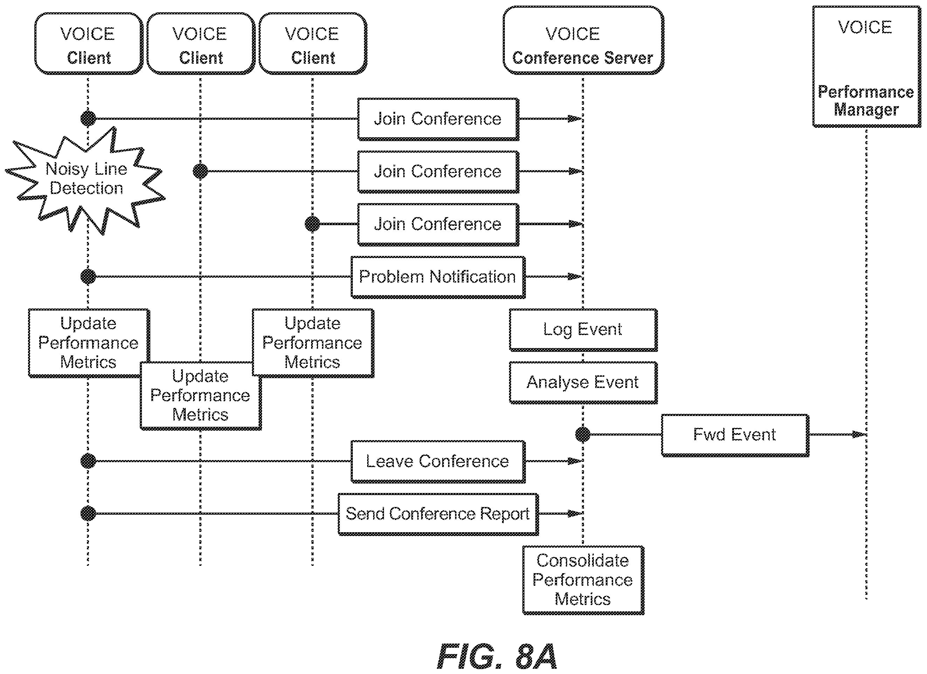

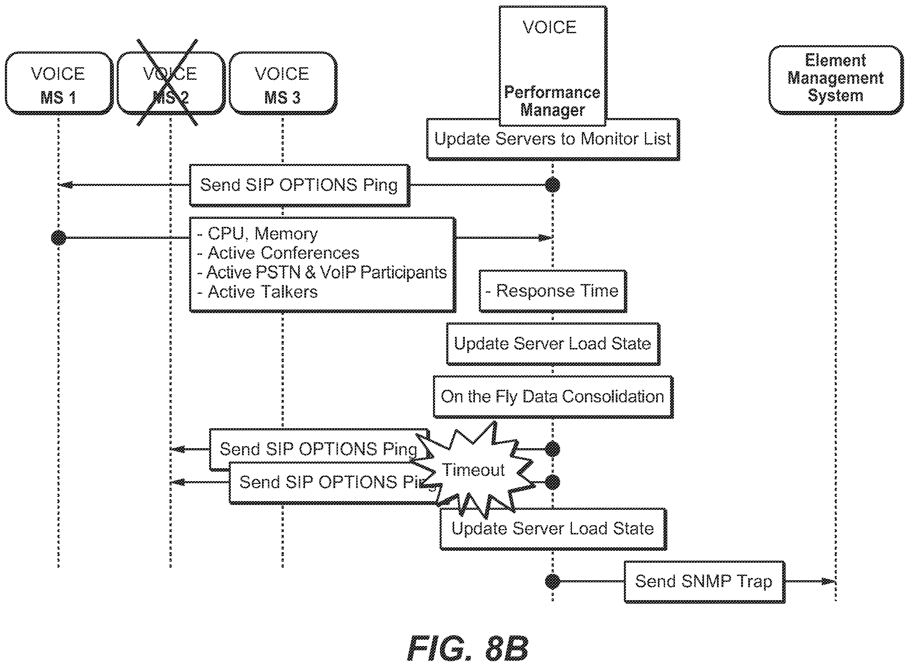

Examples of monitoring and data gathering call flows shown in Figs. 8A & 8B.

### Performance Optimization

DPMS may also provide for the following functions:
- Voice Conference Server High Availability management
- Cascaded and Distributed Mixers management
- Load Balancing and Dynamic Resource management
- Media Performance optimization
- Fault Tolerance and Failover

Decisions to proceed to a failover, to move a participant or conference from one server to another, to route incoming calls to a specific server or region are done based on active real-time monitoring of servers as well as on returned performance metrics values embedded in SIP OPTIONS Ping answers.

DPMS can automate tasks in order to provide automatic redistribution and reconfiguration of resources within a Cluster or across Clusters as required, and maintain the right level of audio quality perceived by the conference participants. Those tasks include:
- Move voice processing from one mixer to another
- Update voice processing configuration to improve packet delay, jitter buffer, voice frame rate, mixing rules and policies - either within the server or by send notifications to the client devices.
- Add/Configure transcoder or mixer resources

Performance Optimization is done according to a set of rules, and is based on participant profile criteria, such as:
- Type of endpoint and the resources available on the endpoint, devices being used at each endpoint
- Type of headset, laptop or mobile client
- What other devices are available to the user (but not used by the client)
- Which other active applications have access to the mic and speaker
- Information about the environment, noise level, echo, etc...
- Type of access network (PSTN, 4G/LTE, 3G, internet, IP-VPN)
- Participant's location, including region, address, cubical, car, home office, coffee shop
- Participants profile (executive, listener, presenter, moderator, customer, partner, team member)

DPMS can move Conferences or Participants sessions from an overloaded Conference Server to a more lightly loaded server to enable graceful recovery. Moving or resource re-allocation process can be based on different criteria, such as apply moves according to conference or session prioritization rules (e.g. CEO quarterly meeting vs. team meeting)

Load balancing decision can be made using any type algorithm based on Conference Server KPIs: Load balancing decision can be handled by Voice Performance System or an external Application Server or any external component through e.g. a standard SIP OPTIONS interface.

The resource management will ensure high level system monitoring is used to prevent process "thrashing". This is when the management operation continually strives to optimise the system with micro changes without considering the overall impact of the resource used to execute those changes.

DPMS can also handle High Availability, Cascading, Distribution and Failover functions, such as:
- Monitor in real-time each Conference Server component (mixer, audio conditioning, IVR, scene manager)
- Report in real-time a wide range of load-based Key Performance Indicators (KPIs):
   ∘ Number of active participants
   ∘ Number of active conferences
   ∘ System CPU and Memory load
   ∘ Number of active talkers

DPMS may also provide software-based High Availability and Automatic Failover capabilities, including:
- Conference state resilience
- Activate audio stream cascading when required
- Move participants seamlessly to new Media Server
- Geographic distribution of redundant Media Server when conference states can be replicated across geographically distributed sites

### Advanced Presence & Location Management

Participants to a Business Voice Conference are connected from different locations.

Participants to a Business Voice Conference can join a conference using different devices, with different capabilities, such as:
- Standard analogue phone with mono audio only
- Standard IP Phone using G.722 wideband codec
- Computer's software client with video and spatial audio
- Mobile smartphone with spatial audio and no video

A model can be created for each Conference Participant, e.g. according to his/her location, profile, activity, position in a room, number of participants within the same room, and device capabilities.

Each participant location, presence status, talking/listening status, as well as current network activity such as presence of a video stream, presence of a file transfer etc. can be updated in real time.

Based on each participant properties and current activity, this information can be transmitted to an external Presence Server and Location Server through a standard interface. Based on this information, it will then be possible to locate each participant into a map, and going further to map each participant into a room. An external Presence Server would then be able to provide very detailed information about each participant such as:
- User participating in a conference right now
- User talking and presenting, do not disturb even with chat messages
- User listening, available for instant messaging

The network activity knowledge enables an audio and scene processing component about current network activity (e.g. video stream, file transfer), as well as indication about current sharing capabilities for each endpoint in order to provide bandwidth optimization for audio.

In addition to each participant network activity, an audio processing component can also be kept informed about the total number of participants, overall quality delivered and current bandwidth utilization in order to help to optimize the overall multimedia converged data/voice/video experience.

### Enhanced Call Detail Records (eCDR)

Through end-to-end performance monitoring capabilities, voice quality metrics can be added as part of traditional Call Detail Records, so that external Reporting and Accounting systems can include those voice quality metrics to their dashboards and reports.

For each participant joining and leaving a conference, each Conference Server can save call signaling and voice quality information at the end of the session. Those CDRs are collected and consolidated on a regular basis by the DPMS component.

Each CDR can contain the following fields:
- UserID, UserName, Email, Language, Location, Timezone, Role, SIP URI, IP address
- ConferenceID: the conference ID joined by the user
- Joining info (dial-in, dial-out)
- Endpoint type (smartphone, tablet, pc, operating system)
- Headset type (brand, model, usb, Bluetooth)
- Audio type (mono, spatial)

- **FirstJoinTime:** the time stamp when the user joined this conference for the first time
- **LastJoinTime:** the time stamp when the user joined this conference after being disconnected
- **LeaveTime:** the time stamp when the user was disconnected from this conference
- **TotalDuration:** the accumulated time when user was connected to this conference
- **ListeningDuration:** the accumulated time when user was listening into this conference
- **TalkingDuration:** the accumulated time when the user was talking into this conference
- **TotalJoinAttempts:** the total number of user's connections into this conference
- **TerminationCode:** a numeric code that caused the termination of a user' session
   ∘ Normal call clearing
   ∘ No Route to Destination
   ∘ Call Rejected
   ∘ Network Out Of Order
   ∘ Network Congestion
   ∘ Resource Unavailable
   ∘ Unauthorized
   ∘ Temporary Failure
- **CallSetupDelay:** the time a user experienced between initial SIP INVITE and Conference's IVR Ack
- **JoinDelay:** the time it took for a user to join the conference, starting from initial SIP INVITE

- **Max,Min,Avg Input Level:** defined as the strength of the audio signal captured by the microphone
- **Max,Min,Avg Output Level:** defined as the strength of the audio signal rendered by the headphone
- **Max, Avg NoiseLevel:** defined as an undesired disturbance of a useful voice signal
- **Signal to Noise Ratio (SNR):** defined as a measured ratio between a useful voice signal and undesired background noise, difference between the speech power and noise power.
- **BackgroundNoiseDetection:** number of time the system detected a background noise condition
- **ImpairmentFactorCode:** defined as a code for quantifying the voice quality degradation introduced
- **PacketLossRate:** defined as the percentage of packets that have been lost in the network. Packet that have been sent but not received by the other party are considered lost.
- **PacketDiscardRate;** defined as the percentage of packets that have been discarded due to late arrival by the remote party's jitter buffer.
- **Max,Avg Jitter:** defined as the variability over time of the packet latency across a network
- **Max, Avg MouthToEarLatency:** defined as the end to end delay between 2 participants in a call, from the input capture by the microphone to the output rendering by the remote headphone
- **Max, Avg RoundTripDelay:** defined as the round trip delay caused by the network from one endpoint to the media server, and back from the server to the endpoint.
- **Max, Avg OneWavDelay:** defined as the one way delay caused by the network from one endpoint to the media server.
- **Max, Avg EndSystemDelay:** defined as the delay caused by both endpoint systems, equivalent to "mouth to ear latency" - "one way delay".
- **EchoReturnLoss:** defined as the difference in dB between the original signal amplitude and its echo
- **EchoReturnLossEnhancement:** defined as the difference in dB of the echo level before and after echo cancellation
- **MeanOpinionScore:** defined as an index for the human user's perspective of the voice quality
- **RFactor:** Rating Factor is defined as a numerical score derived from voice over IP metrics such as latency, jitter and packet loss, for the segment of the call that is carried over an IP network using an RTP session
- **ExternalRFactor:** External Rating Factor is defined as a numerical score derived from network latency, for the network segment of the call that is that is not an IP network, such as a cellular or traditional public switched telephone network.
- **Frequency/audio bandwidth:** defined as the network bandwidth that carries voice packets.
- **Data bandwidth:** defined as the network bandwidth that does not carries voice or video packets (e.g. data packets, files, email, web, ...)
- **Codec format (G.711, Dolby Voice codec, G.722 ...):** defined as the audio coder/decoder algorithm used during the voice session.

A participant may also be allowed / enabled to be attending more than one conference. E.g., such participant may be mostly listening to conference A, but also be waiting for a notification from conference B to indicate when it is their turn to give a presentation.

### Conference Call Detail Records (cCDR)

In addition of regular "per participant" Call Detail Records, information relative to each conference can be stored in order to record statistics at the Conference level, including the following information:
- ConferenceID
- ConferenceTitle
- ConferenceRoomType (mono, spatial, ad hoc, scheduled)
- ConferenceHost
- ExpectedParticipants
- MaxParticipants
- VoipParticipants
- PstnParticipants
- DialInParticipants
- DialOutParticipants
- ConferenceStartedTime
- ConferenceEndTime
- ConferenceDuration
- PstnMinutes
- VoIPMinutes
- MaxActiveSessions
- MaxActiveTalkers
- 0,1,2,3,4,5,more TalkerDuration

- NumberBackgroundNoiseDetection
- Max,Avg PacketLossRate
- Max, Avg PacketDiscardRate
- Max,Avg Jitter
- Max, Avg MouthToEarLatency
- Max, Avg RoundTripDelay
- Max, Avg OneWayDelay
- Max, Avg EndSystemDelay

- MultipartyMeanOpinionScore

### Conference Platform API (Application Programming Interface)

Dolby Voice Solution provides an API in order to allow 3^{rd} party developer or system integrators to access to the information we are gathering.

Most of the Conference Server capabilities can be exposed through this API.

This API allows to embed Conferencing capabilities in other applications, such as through a web page, within a mobile application, or within a Social Business/Media tool.

Both Client and Server capabilities may be exposed through this API.

## Claims

1. A system for providing services in a voice conferencing environment, comprising at least one server cluster, each cluster comprising a plurality of activated voice conferencing servers and a performance management system adapted to log at least one performance metric related to at least one of the activated voice conferencing servers, **characterized in that**
said performance management system is configured to receive an activation request from a requesting voice conferencing server and, based on this activation request and a license file installed in the performance management system, automatically activate the requesting voice conferencing server by providing a license-key to said requesting conferencing server, and **in that**
the license file includes a limited number of licensed ports, and the performance management system is configured to automatically execute a configuration of the activated voice conferencing servers to enable a particular activated voice conferencing server to participate in a current conference only if said particular activated voice conferencing server is covered by said limited number of licensed ports.

2. The system according to Claim 1, wherein at least one voice conferencing server includes at least one model object related to at least one voice conference participant, the model object including information about any of: the participant's location, profile, activity, position, number of other participants in the same room and device capabilities.

3. The system according to Claim 1, wherein at least one voice conferencing server is adapted to automatically update at least one of a participant's location information, a participant's presence status, a participant's talking/listening status, a current network activity such as presence of a videostream or file transfer.

4. The system according to Claim 3, further including a presence server operatively connected to the at least one voice conferencing server and adapted to determine current user-related information related to any of: current user participation, current user talking and/or presenting, current user requesting not to be disturbed and current user available for instant messaging.

5. The system according to claim 1, wherein a server not covered by said limited number of licensed ports is adapted to be configured subsequently upon obtaining a license for this server.

6. The system according to claim 1, wherein the performance management system is adapted to perform a license check only during an initial activation, preceding a start-up of a voice conference, such that a failure of the performance management system during said voice conference does not affect said voice conference.

## Patentansprüche

1. System zum Vorsehen von Diensten in einer Sprachkonferenzschaltungsumgebung, aufweisend mindestens einen Server-Cluster, wobei jeder Server-Cluster mehrere aktivierte Sprachkonferenzschaltungsserver und ein Leistungsverwaltungssystem aufweist, das zum Protokollieren von mindestens einer Leistungsmetrik bezüglich mindestens einem der aktivierten Sprachkonferenzschaltungsserver geeignet ist, **dadurch gekennzeichnet, dass**
das Leistungsverwaltungssystem zum Empfangen einer Aktivierungsanforderung von einem anfordernden Sprachkonferenzschaltungsserver und, auf Grundlage dieser Aktivierungsanforderung und einer Lizenzdatei, die im Leistungsverwaltungssystem eingerichtet ist, zum automatischen Aktivieren des anfordernden Sprachkonferenzschaltungsserver durch Zuführen eines Lizenzschlüssels zum anfordernden Sprachkonferenzschaltungsserver konfiguriert ist, und dass
die Lizenzdatei eine beschränkte Anzahl von lizensierten Ports enthält, und das Leistungssystem dazu konfiguriert ist, nur dann eine Konfiguration der aktivierten Sprachkonferenzschaltungsserver zum Ermöglichen, dass ein bestimmter aktivierter Sprachkonferenzschaltungsserver an einer laufenden Konferenz teilnimmt, automatisch auszuführen, wenn der bestimmte aktivierte Sprachkonferenzschaltungsserver durch die beschränkte Anzahl von lizensierten Ports abgedeckt ist.

2. System nach Anspruch 1, wobei mindestens ein Sprachkonferenzschaltungsserver mindestens ein Modellobjekt bezüglich mindestens einem Sprachkonferenzteilnehmer enthält, wobei das Modellobjekt Information über jegliches von Folgendem enthält: den Standort des Teilnehmers, Profil, Aktivität, Position, Anzahl von anderen Teilnehmern im selben Raum und Gerätekapazitäten.

3. System nach Anspruch 1, wobei mindestens ein Sprachkonferenzschaltungsserver dazu geeignet ist, mindestens eines von einer Standortinformation eines Teilnehmers, eines Anwesenheitsstatus eines Teilnehmers, eines Rede-/Zuhör-Status eines Teilnehmers, einer laufenden Netzwerkaktivität, wie etwa Vorhandensein eines Videostreams oder Dateitransfers, automatisch zu aktualisieren.

4. System nach Anspruch 3, ferner enthaltend einen Anwesenheitsserver, der betriebsfähig mit dem mindestens einen Sprachkonferenzschaltungsserver verbunden ist und dazu geeignet ist, laufende benutzerbezogene Information bezüglich jeglichem von Folgendem zu bestimmen: derzeitige Benutzerteilnahme, derzeitiger Benutzer, der spricht und/oder anwesend ist, derzeitiger Benutzer, der anfordert, nicht gestört zu werden, und derzeitiger Benutzer, der für Instant Messaging verfügbar ist.

5. System nach Anspruch 1, wobei ein Server, der nicht durch die beschränkte Anzahl von lizensierten Ports abgedeckt ist, dazu geeignet ist, anschließend an das Erhalten einer Lizenz für diesen Server konfiguriert zu werden.

6. System nach Anspruch 1, wobei das Leistungsverwaltungssystem zum Ausführen einer Lizenzprüfung nur während einer anfänglichen Aktivierung geeignet ist, dem Start einer Sprachkonferenz vorausgehend, sodass ein Ausfall des Leistungsverwaltungssystems während der Sprachkonferenz die Sprachkonferenz nicht beeinträchtigt.

## Revendications

1. Système pour fournir des services dans un environnement de conférence vocale, comprenant au moins une grappe de serveurs, chaque grappe comprenant une pluralité de serveurs de conférence vocale activés et un système de gestion de performances adapté à consigner au moins une métrique de performances liée à au moins un des serveurs de conférence vocale activés, le système étant **caractérisé en ce que**
ledit système de gestion de performances est configuré pour recevoir une requête d'activation depuis un serveur de conférence vocale requérant et, en fonction de cette requête d'activation et d'un fichier de licence installé dans le système de gestion de performances, activer automatiquement le serveur de conférence vocale requérant en fournissant une clé de licence audit serveur de conférence requérant, et **en ce que**
le fichier de licence comporte un nombre limité de ports sous licence, et le système de gestion de performances est configuré pour exécuter automatiquement une configuration des serveurs de conférence vocale activés pour permettre à un serveur de conférence vocale activé particulier de prendre part à une conférence en cours uniquement si ledit serveur de conférence vocale activé particulier est couvert par ledit nombre limité de ports sous licence.

2. Système selon la revendication 1, dans lequel au moins un serveur de conférence vocale comporte au moins un objet-modèle lié à au moins un participant à une conférence vocale, l'objet-modèle comportant des informations concernant au moins un des éléments dans le groupe constitué par : la localisation du participant, son profil, son activité, sa position, le nombre d'autres participants dans la même salle et des capacités de dispositifs.

3. Système selon la revendication 1, dans lequel au moins un serveur de conférence vocale est adapté à mettre automatiquement à jour des informations de localisation d'un participant et/ou un statut de présence d'un participant et/ou un statut d'intervention/d'écoute d'un participant et/ou une activité de réseau en cours telle que la présence d'un flux vidéo ou d'un transfert de fichier.

4. Système selon la revendication 3, comportant en outre un serveur de présence connecté fonctionnellement à l'au moins un serveur de conférence vocale et adapté à déterminer des informations relatives à un utilisateur en cours concernant au moins un des éléments dans le groupe constitué par : une participation de l'utilisateur en cours, une intervention et/ou une présentation de l'utilisateur en cours, une requête de l'utilisateur en cours de ne pas être dérangé et une disponibilité de l'utilisateur en cours vis-à-vis d'une messagerie instantanée.

5. Système selon la revendication 1, dans lequel un serveur qui n'est pas couvert par ledit nombre limité de ports sous licence est adapté à être configuré suite à l'obtention d'une licence pour ce serveur.

6. Système selon la revendication 1, dans lequel le système de gestion de performances est adapté à procéder à une vérification de licence uniquement lors d'une activation initiale, précédant un lancement d'une conférence vocale, de façon à ce qu'une défaillance du système de gestion de performances au cours de ladite conférence vocale n'affecte pas ladite conférence vocale.
